# EUROPEAN PATENT APPLICATION

(11) **EP 4 557 249 A1**
(43) Date of publication of application: **21.05.2025**
(21) Application number: 24207915.0
(22) Date of filing: 21.10.2024
(51) Int. Cl.: G07C 5/00, G07C 5/08

(54) **APPARATUSES, COMPUTER-IMPLEMENTED METHODS, AND COMPUTER PROGRAM PRODUCTS FOR REMOTE VEHICLE ACCESS AND DATA TRANSFER**

(30) Priority: 13.11.2023 US 202318507268
(71) Applicant: Honeywell International Inc., Charlotte, NC 28202 (US)
(72) Inventor: TONHAJZER, Tomas, Charlotte, 28202 (US); TRENZ, Tomas, Charlotte, 28202 (US); KRAL, Tomas, Charlotte, 28202 (US); HASMANDA, Martin, Charlotte, 28202 (US)
(74) Representative: Haseltine Lake Kempner LLP

(57) **Abstract**

Embodiments of the disclosure provide for initiating remote transfers of vehicle data from a vehicle recording system aboard a vehicle. Some embodiments obtain a request to remotely download vehicle data from a vehicle recording system to a remote computing environment without physically accessing the vehicle recording system and while a vehicle containing the vehicle recording system is in motion. Some embodiments initiate, based at least in part on the request, a remote transfer of the vehicle data from the vehicle recording system to the remote computing environment. In some embodiments, the remote transfer occurs without requiring a user to physically access the vehicle recording system. In some embodiments, the remote computing environment is accessible to a user-controlled device to provide the vehicle data.

## Description

### TECHNOLOGICAL FIELD

Embodiments of the present disclosure are generally directed to initiating remote downloads of data from a vehicle recording system.

### BACKGROUND

Typical approaches to accessing vehicle data from a vehicle recording system require a user to physically access the vehicle recording system. For example, to access flight data from a flight recorder, a ground crew member may need to remove portions of an aircraft to physically access and establish a data link with the flight recorder. For safety reasons associated with physically accessing the vehicle recording system, the vehicle may need to remain immobile throughout a user physically accessing the vehicle recording system. The time required to physically access the vehicle recording system may decrease efficiency of vehicle operation and prevent real-time monitoring of vehicle performance and statuses.

Applicant has discovered various technical problems associated with accessing vehicle data from a vehicle recording system. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for remote download of vehicle data from a vehicle recording system to a remote computing environment. For example, embodiments of the present disclosure provide for initiating remote transfers of data from a vehicle recording system of a vehicle to a remote computing environment while the vehicle is in motion and without requiring a user to physically access the vehicle recording system. Other implementations for initiating remote transfers of vehicle data from a vehicle recording system will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for remotely downloading data from a vehicle recording system is provided. The computer-implemented method is executable utilizing any of a myriad of computing device(s) and/or combinations of hardware, software, firmware. In some example embodiments an example computer-implemented method includes obtaining a request to remotely download vehicle data from a vehicle recording system to a remote computing environment without physically accessing the vehicle recording system and while a vehicle containing the vehicle recording system is in motion. In some example embodiments, the method includes initiating, based at least in part on the request, a remote transfer of the vehicle data from the vehicle recording system to the remote computing environment. In some example embodiments, the remote transfer occurs without requiring a user to physically access the vehicle recording system, and the remote computing environment is accessible to a user-controlled device to provide the vehicle data.

In some example embodiments, the vehicle embodies an aerial vehicle, and the vehicle recording system embodies a flight recorder of an aerial vehicle. In some example embodiments, the request is obtained from the remote computing environment, and the remote computing environment generates the request in response to user input provided to a user interface by the user-controlled device in an environment external to the vehicle. In some example embodiments, the user-controlled device embodies a control interface onboard the vehicle and configured to communicate with the vehicle recording system, and the request is obtained via a user input provided to a control interface of the vehicle. In some example embodiments, the vehicle embodies an aerial vehicle, and the control interface embodies an instrument panel of the aerial vehicle. In some example embodiments, the method includes initiating the remote transfer of the vehicle data in response to receiving an approval of the request from the remote computing environment. In some example embodiments, the request comprises configuration data. In some example embodiments, the method includes determining a subset of the vehicle data to remotely transfer based at least in part on the configuration data, wherein the remote transfer is limited to the determined subset of the vehicle data.

In some example embodiments, the remote transfer of the vehicle data causes the remote computing environment to render the vehicle data on a display of the user-controlled device. In some example embodiments, the method includes generating the request in response to determining a current location of the vehicle satisfies a predefined trigger condition comprising a predefined location.

In some example embodiments, the method includes obtaining a data transmission cost based at least in part on a current location of the vehicle. In some example embodiments, the method includes generating the request in response to determining the data transmission cost meets a predefined trigger condition. In some example embodiments, the method includes obtaining real-time vehicle data from the vehicle recording system, and generating the request in response to determining the real-time vehicle data satisfies at least one predefined trigger condition. In some example embodiments, the at least one predefined trigger condition comprises a predefined vehicle speed. In some example embodiments, the at least one predefined trigger condition comprises a predefined vehicle status. In some example embodiments, the predefined vehicle status comprises at least one of a power failure, engine failure, or turbulence.

In some example embodiments, the vehicle data comprises historical vehicle data and real-time vehicle data associated with the vehicle. In some example embodiments, the vehicle data comprises one or more audio recordings of an environment internal to the vehicle. In some example embodiments, the vehicle data comprises one or more images of an environment internal to the vehicle. In some example embodiments, the method includes determining a subset of the vehicle data that is available for the remote transfer and causing provision of a notification to the remote computing environment. In some example embodiments, the notification indicates the subset of the vehicle data and causes the remote computing environment to render a user interface indicative of the subset of the vehicle data on a display of the user-controlled device.

In accordance with another aspect of the present disclosure, a computing apparatus for remotely downloading data from a vehicle recording system is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein.

In accordance with another aspect of the present disclosure, a computer program product for remotely downloading data from a vehicle recording system is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a networked environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example data architecture in accordance with at least some example embodiments of the present disclosure.
FIG. 4 illustrates a diagram of an example workflow for initiating remote transfers of vehicle data in an aerial environment context in accordance with at least some example embodiments of the present disclosure.
FIG. 5 illustrates a functional band diagram depicting operations of an example workflow for initiating remote transfers of vehicle data in accordance with at least some example embodiments of the present disclosure.
FIG. 6 illustrates a functional band diagram depicting operations of an example workflow for initiating remote transfers of vehicle data in accordance with at least some example embodiments of the present disclosure.
FIG. 7 illustrates a flowchart depicting operations of an example process for initiating a remote transfer of vehicle data in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of providing access to vehicle data from a vehicle recording system. Typically, vehicle data is obtained from a vehicle recording system while a vehicle is immobile. For example, in an aerial vehicle context, flight data is typically obtained from an aircraft flight data recorder only once the aircraft is grounded. In such approaches, vehicle recording systems may only be accessible via a user physically interfacing with the vehicle recording system. For example, a flight data recorder is typically only accessible via a user removing portions of an aircraft (e.g., panels, casings, and/or the like) and establishing a physical connection between the flight data recorder and a user-controlled device. However, such approaches may reduce vehicle operation efficiency due to the additional time required to physically access the vehicle recording system. Additionally, vehicle operation efficiency may be further reduced due to requirements that the vehicle remain immobile while a user physically interfaces with the vehicle recording system.

Embodiments of the present disclosure overcome the technical challenges of obtaining vehicle data from a vehicle recording system at least in part by enabling a vehicle recording system to remotely transfer vehicle data to a remote computing environment while the vehicle containing the vehicle recording system is in motion and without requiring a user to physically access the vehicle recording system. The various embodiments of the present disclosure may initiate a remote transfer of data from the vehicle recording system a remote computing environment external to the vehicle to improve the operational efficiency of the vehicle. In some embodiments, a vehicle recording system of the present disclosure is configured to obtain requests for initiating a remote transfer of vehicle data.

For example, the vehicle recording system may receive a request from a remote computing environment based at least in part on the remote computing environment receiving a user input to a user interface from a user-controlled device external to the vehicle. As another example, the vehicle recording system may receive or generate a request to initiate a remote transfer of vehicle data based at least in part on a user aboard the vehicle providing a user input to a user-controlled device aboard the vehicle (e.g., an instrument panel or other control interface). In still another example, the vehicle recording system may automatically generate (or receive) a request to initiate a remote transfer of vehicle data based at least in part on the vehicle recording system (or a remote computing environment) determining that one or more trigger conditions are satisfied. In some contexts, the trigger conditions include a current location of the vehicle, measurements of vehicle performance (e.g., speed, altitude, fuel consumption, and/or the like), indications of vehicle statuses (e.g., power failure, control failure, and/or the like), a current cost of data transmission, and/or the like.

In various embodiments, the described techniques for initiating remote transfers of vehicle data from a vehicle recording system to a remote computing environment improve the precision, accuracy, and certifiability of vehicle monitoring processes. For example, typical approaches to monitoring a vehicle may be limited to transponder-based systems (e.g., automatic dependent surveillance-broadcast (ADS-B) systems, and/or the like) that provide limited real-time information of vehicle location, speed, altitude, and/or the like. In such approaches, any loss of communication between the vehicle and a monitoring system may result in unrecoverable gaps in vehicle information. Additionally, because such approaches do not transmit vehicle information directly from the vehicle recording system, the vehicle information may not be certifiable as originating from the vehicle recording system. Some embodiments of the present disclosure enable remote transfer of both real-time and historical vehicle data directly from the vehicle recording system, which may enable vehicle monitoring processes, systems, and/or the like to certify the vehicle data as originating from a vehicle monitoring system and potentially obtain a more complete and enriched understanding of vehicle performance and vehicle statuses while the vehicle is in motion.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with urban air mobility (UAM).

"UAM" refers to urban air mobility, which includes all aerial vehicles and functions for aerial vehicles that are capable of performing vertical takeoff and/or vertical landing procedures. Non-limiting examples of UAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Vehicle recording system" refers to any system embodied in hardware, software, firmware, and/or any combination thereof, that obtains and stores vehicle data. In some embodiments, a vehicle recording system receives and records in storage media data from one or more sensors, systems, controls, and/or the like of a vehicle. In some embodiments, a vehicle recording system embodies a flight data recorder (FDR), cockpit voice recorder (CVR), datalink recorder (DLR), air image recorder (AIR), and/or the like onboard an aerial vehicle. In some embodiments, a vehicle recording system of the present disclosure includes or is communication with means for wirelessly provisioning vehicle data to a remote computing environment in an environment external to the vehicle. In some embodiments, a vehicle recording system may include (or be connected to) a transmitter that provides satellite uplink and downlink capabilities to enable a remote computing environment to download vehicle data from the vehicle recording system while the vehicle is in motion and without requiring a user to physically access the vehicle recording system to initiate the download.

"Location" refers to any physically-defined position in an environment. In some embodiments, a location is expressed by one or more geographic coordinates, such as longitude, latitude, altitude, global area reference system (GARS) code, open location code, geohash, and/or the like. In some embodiments, in addition to a physically-defined location, "location" further refers to a particular time or time interval at the physically-defined location. In some embodiments, location further includes an indicated airspeed (IAS), true airspeed (TAS), groundspeed (GS), calibrated airspeed (CAS), bearing, heading, and/or the like of a vehicle.

"Environment" refers to a physically-defined area. "Aerial environment" refers to an air-based environment. "Vehicle environment" refers to a physically-defined area within a vehicle.

"Satellite-based positioning system" refers to any system embodied in hardware, software, firmware, and/or any combination thereof, that relies on at least one satellite to identify a signal indicative of a position of the system, an associated vehicle, and/or one or more celestial bodies. In some embodiments, the signal includes data that provides (e.g., or from which may be generated) location coordinates of the satellite-based positioning system or a celestial body at one or more discrete time points. In some embodiments, the satellite-based positioning system is an artificial, planet-orbiting apparatus that transmits signal to one or more receiver circuits. In some contexts, the signal encodes position data may be referred to as "ephemeris" data or "ephemeris." As one example, a signal may be generated and transmitted by a global navigation satellite system (GNSS) or a regional navigation satellite system (RNSS). Example GNSSs and RNSSs from which signal may be obtained include Global Positioning System (GPS), Global Navigation Satellite System (GLONASS), BeiDou Navigation Satellite System, Galileo, Quasi-Zenith Satellite System, and India Regional Satellite System (IRNSS).

### Example Systems and Apparatuses of the Disclosure

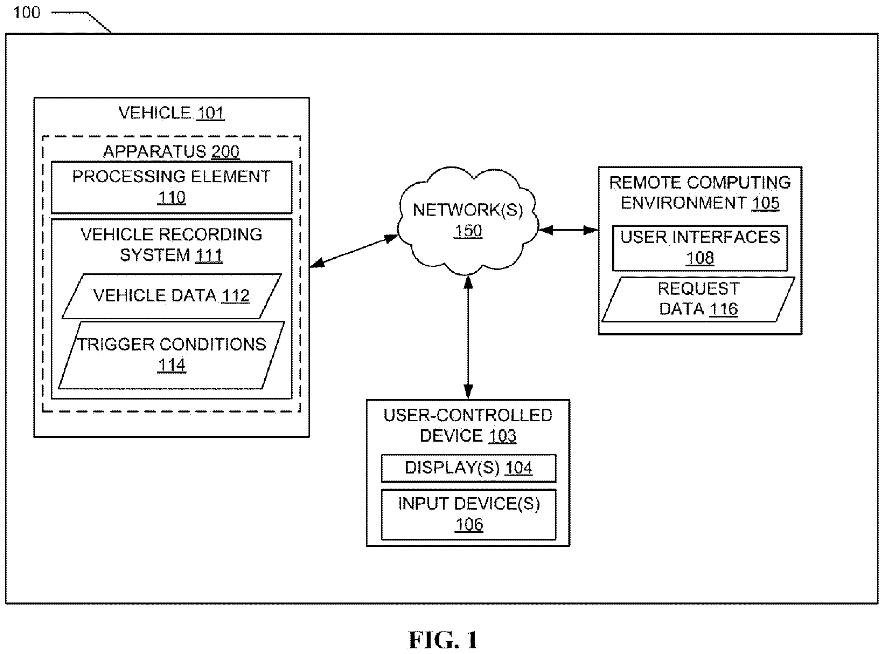

FIG. 1 illustrates a block diagram of a networked environment that may be specially configured within which embodiments of the present disclosure may operate. Specifically, FIG. 1 depicts an example networked environment 100. As illustrated, the networked environment 100 includes one or more vehicles 101, one or user-controlled devices 103, and a remote computing environment 105.

In some embodiments, the vehicle 101 includes a processing element 110 and a vehicle recording system 111 that perform various functions and actions related to enacting techniques and processes described herein for initiating remote transfers of vehicle data, such as obtaining a request to initiate a remote transfer of vehicle data 112, determining whether one or more trigger conditions 114 for initiating a remote transfer are satisfied, receiving user inputs from user-controlled devices 103, and/or the like. In some embodiments, the vehicle 101 includes one or more user-controlled devices 103. Alternatively, or additionally, in some embodiments, one or more user-controlled devices 103 are in an environment external to the vehicle 101.

In some embodiments, the processing element 110 and vehicle recording system 111 are embodied as an apparatus 200 configured to perform the various functions and actions described herein for initiating remote transfers of vehicle data 112. In some embodiments, the apparatus 200 includes one or more circuitries (e.g., physical, virtual, and/or the like) that intake and process data from other computing devices and systems including user-controlled devices 103, remote computing environments, and/or the like. In some embodiments, the apparatus 200 includes input/output circuitry that enables a user-controlled device 103, remote computing environment 105, and/or the like, to provide input to and receive output from the apparatus 200. For example, the input/output circuitry may include or embody user interfaces, input devices, and/or the like for receiving input from and providing output to a user-controlled device 103, remote computing environment 105, and/or the like.

In some embodiments, the apparatus 200 includes one or more circuitries or interfaces that communicate with user-controlled devices, remote computing environments 105, and/or the like. For example, the apparatus 200 may include a communication interface that enables communication between the apparatus 200 and a remote computing environment 105. For example, the apparatus 200 may include a communication interface that enables the remote computing environment 105 to provision requests to and receive vehicle data 112 from the vehicle recording system 111 (e.g., embodied as the apparatus 200).

In some embodiments, the apparatus 200 includes recording circuitry that vehicle 101 to carry out various functions described herein including initiating remote transfers of vehicle data 112 to a remote computing environment via one or more networks 150, determining a subset of vehicle data 112 that is available for remote transfer, and determining whether one or more trigger conditions 114 for initiating a remote transfer of vehicle data 112 are satisfied.

In some embodiments, the vehicle recording system 111 stores data associated with the operation of the various applications, apparatuses, and/or functional entities described herein. In some embodiments, data stored at the vehicle recording system 111 includes vehicle data 112, one or more trigger conditions 114, and/or the like. In some embodiments, the vehicle recording system 111 temporarily stores request data 116 associated with a request to initiate a remote transfer of vehicle data 112. For example, the vehicle recording system 111 may generate and temporarily store an indication for a subset of vehicle data 112 that is available to be remotely transferred to a remote computing environment.

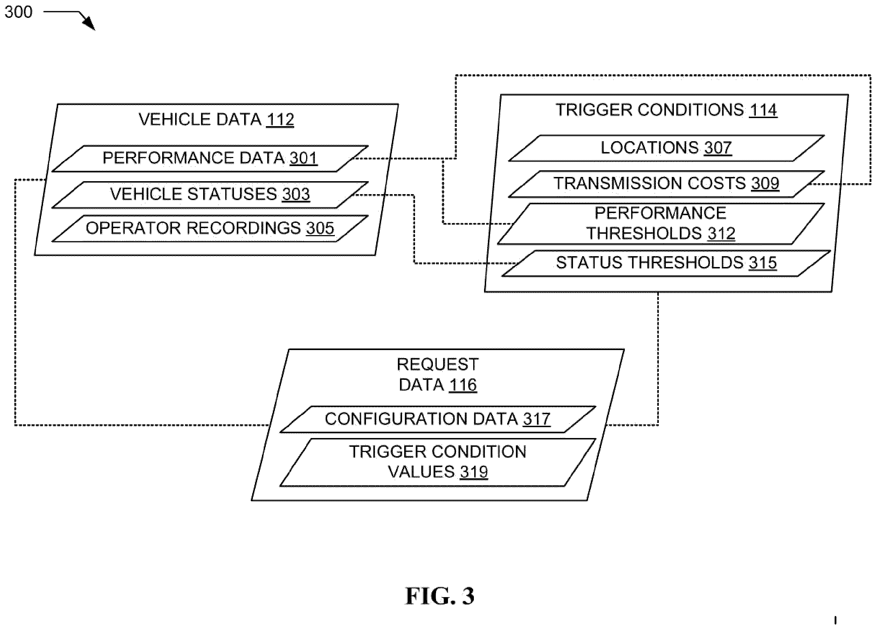

In some embodiments, the vehicle data 112 includes any data associated with performance of the vehicle 101, statuses of the vehicle 101, or activities occurring within an internal environment or surrounding external environment of the vehicle 101. In some embodiments, the vehicle data 112 includes any data indicative of a location of a vehicle or usable to generate the position of the vehicle. For example, the vehicle data 112 may include geographic coordinates, an altitude, heading, bearing, ascension or descension rate, speed, and/or the like. In some embodiments, the trigger conditions 114 include predefined thresholds for initiating remote transfers of the vehicle data 112. For example, the trigger conditions 114 include predefined locations, vehicle performance values, vehicle performance statuses, data transmission costs, and/or the like that may be used to conditionally initiate remote transfers of vehicle data 112 from the vehicle recording system 111 to the remote computing environment 105. Additional example aspects of the vehicle data 112, trigger conditions 114, and request data 116 are shown in the data architecture 300 depicted in FIG. 3 and described herein.

In some embodiments, the user-controlled device 103 provides user inputs to the remote computing environment 105, apparatus 200, and/or the like. In some embodiments, the user inputs cause the remote computing environment 105 or apparatus 200 to generate a request to initiate a remote transfer of vehicle data 112 to the remote computing environment 105. In some embodiments, the user inputs cause the remote computing environment 105 to provision a request to the apparatus 200, or vice versa. In some embodiments, the user-controlled device 103 receives and/or accesses user interfaces 108 from the remote computing environment 105. For example, the user-controlled device 103 may access a user interface 108 for requesting remote transfers of vehicle data 112, where the user interface is provisioned to the user-controlled device by the remote computing environment 105 via a network 150.

In some embodiments, the user-controlled device 103 includes include one or more displays 104 on which notifications, graphical user interfaces (GUIs), and other information related to vehicle data 112, trigger conditions 114, remote transfer requests, and/or the like, may be rendered. In some embodiments, a display 104 includes a CRT (cathode ray tube), LCD (liquid crystal display) monitor, LED (light-emitting diode) monitor, and/or the like, for displaying information/data to an operator of the user-controlled device 103. In one example, the display 104 may include a user interface 108 provided by a remote computing environment 105 to the user-controlled device 103, where the user interface 108 comprises vehicle data 112 that was remotely transferred to the remote computing environment 105.

In some embodiments, the user-controlled device 103 includes one or more input devices 106 for receiving user inputs. For example, the input device 106 may receive user inputs for requesting initiation of a remote transfer of vehicle data 112 from the vehicle recording system 111 to a remote computing environment 105. In another example, the input device 106 may receive inputs for configuring trigger thresholds. The input device 106 may include any number of devices that enable human-machine interface (HMI) between a user and the user-controlled device 103. In some embodiments, the input device 106 include one or more buttons, cursor devices, joysticks, touch screens, including three-dimensional or pressure-based touch screens, camera, finger-print scanners, accelerometer, retinal scanner, gyroscope, magnetometer, or other input devices.

In some embodiments, the remote computing environment 105 includes any number of computing device(s) and/or other system(s) embodied in hardware, software, firmware, and/or the like that initiates remote transfers of vehicle data 112 from the vehicle recording system 111 and receives remote transfers of vehicle data 112. In some embodiments, the remote computing environment 105 embodies a portal, application, platform, and/or the like by which the user-controlled device 103 may request transfers of and view vehicle data 112. In some embodiments, the remote computing environment 105 generates and provisions user interfaces 108 to a user-controlled device 103. In some embodiments, the user interfaces 108 enable the user-controlled device 103 to provide user inputs for configuring requests for transferring vehicle data 112. For example, the remote computing environment 105 may embody a web server that provisions a user interface 108 to a user-controlled device 103. In some embodiments, the remote computing environment 105 generates request data 116 based at least in part on user inputs obtained via the user interfaces 108. In some embodiments, the request data 116 indicates one or more types of vehicle data requested for transfer, time intervals by which a subset of vehicle data may be identified and transferred, trigger condition values, and/or the like. In some embodiments the remote computing environment 105 generates and provisions requests to the apparatus 200. In some embodiments, the remote computing environment 105 receives requests from the apparatus 200 and determines whether to approve or deny the requests.

In some embodiments, the apparatus 200, user-controlled device 103, and remote computing environment 105 are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200 and the remote computing environment 105. For example, the apparatus 200 may provision vehicle data 112 to a remote computing environment 105 via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

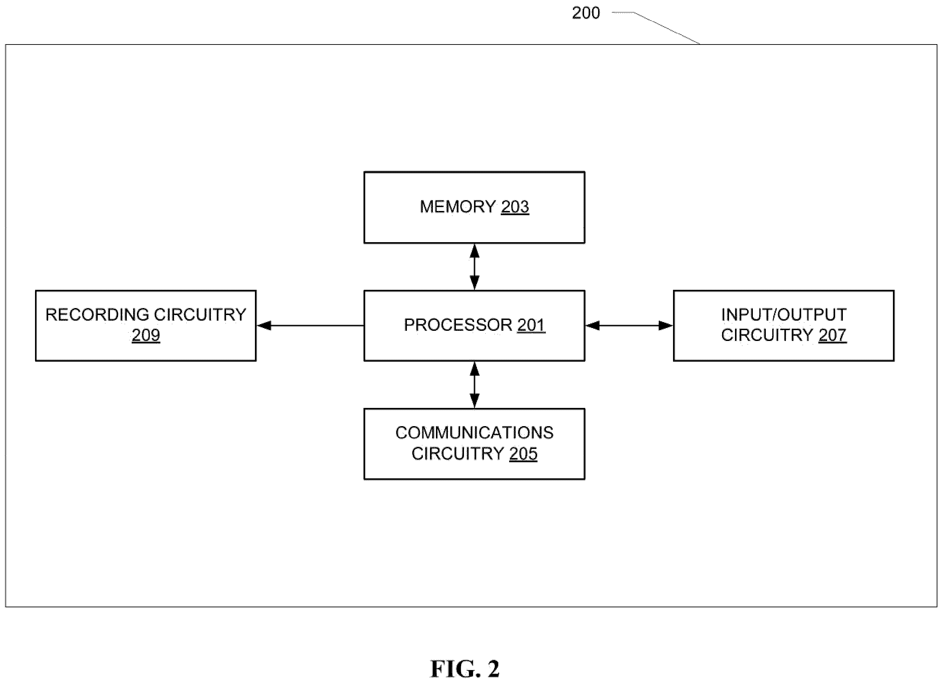

FIG. 2 illustrates a block diagram of an example apparatus 200 that may be specially configured in accordance with at least some example embodiments of the present disclosure. The apparatus 200 may carry out functionality and processes described herein to record vehicle data, initiate remote transfers of vehicle data, obtain requests to initiate the remote transfers, determine whether trigger conditions for initiating the remote transfers are met, and/or the like. In some embodiments, the apparatus 200 includes a processor 201, memory 203, communications circuitry 205, input/output circuitry 207, and recording circuitry 209. In some embodiments, the apparatus 200 is configured, using one or more of the processor 201, memory 203, communications circuitry 205, input/output circuitry 207, and/or recording circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, restoring, processing, displaying, storing, determining, creating/generating, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., recording vehicle data, determining whether trigger conditions for initiating remote transfers of vehicle data are satisfied, obtaining and processing requests for initiating remote transfers of vehicle data, and/or the like). In some embodiments, the memory 203 is embodied as a vehicle recording system 111 as shown in FIG. 1 and described herein. In some embodiments, the memory 203 includes vehicle data 112, trigger conditions 114, request data 116, and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multicore processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with initiating a remote transfer of vehicle data 112 to a remote computing environment 105. In some embodiments, the processor 201 includes hardware, software, firmware, and/or the like, that obtain requests to initiate a remote transfer of vehicle data 112, configure trigger conditions for initiating remote transfers, determine satisfaction of trigger conditions, determine subsets of vehicle data 112 that is available for transfer, and/or the like. For example, the processor 201 may generate a request to initiate a remote transfer of vehicle data 112 based at least in part on a user input from a user-controlled device 103 and/or determining that the vehicle data 112 meets one or more trigger conditions. In some embodiments, the process 201 includes hardware, software, firmware, and/or the like, that determine whether a location of the vehicle 101 matches or is within a predefined location. As another example, the processor 201 may obtain a current cost of transmitting data from the vehicle recording system 111 to a remote computing environment 105.

In some embodiments, the apparatus 200 includes input/output circuitry 207 that provides output to a user (e.g., an operating entity of a vehicle 101 or remote computing environment 105) and, in some embodiments, receives an indication of a user input. For example, in some contexts, the input/output circuitry 207 provides output to and receives input from one or more user-controlled devices 103, remote computing environments 105, and/or the like. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, vehicle recording system 111, and/or the like). In some embodiments, the input/output circuitry 207 includes or utilizes a user-facing application to provide input/output functionality to a display of a user-controlled device 103, remote computing environment 105, and/or other display associated with a user.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from a vehicle recording system to remote computing environments 105, user-controlled devices 103, and/or other external computing devices in communication with the apparatus 200.

The recording circuitry 209 includes hardware, software, firmware, and/or a combination thereof, that record vehicle data 112, receive requests to initiate remote transfers of the vehicle data 112, determine whether the vehicle data 112 satisfies one or more trigger conditions, and initiate remote transfers of vehicle data 112. For example, in some contexts, the recording circuitry 209 includes hardware, software, firmware, and/or the like, that determine whether a current location of the vehicle 101 matches or is within a predefined location at which a remote transfer of vehicle data 112 to a remote computing environment 105 may be initiated. In some embodiments, the recording circuitry 209 includes hardware, software, firmware, and/or the like, that determine a subset of vehicle data 112 that is available for transfer. In some embodiments, the recording circuitry 209 includes hardware, software, firmware, and/or the like, that request approval from a remote computing environment 105 for initiating a remote transfer of vehicle data 112 to the remote computing environment 105. In some embodiments, the recording circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or recording circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication interface 205, and/or recording circuitry 209 is/are combined with the processor 201, such that the processor 201 performs one or more of the operations described above with respect to each of these sets of circuitry 203-209.

### Example Data Architectures and Workflows of the Disclosure

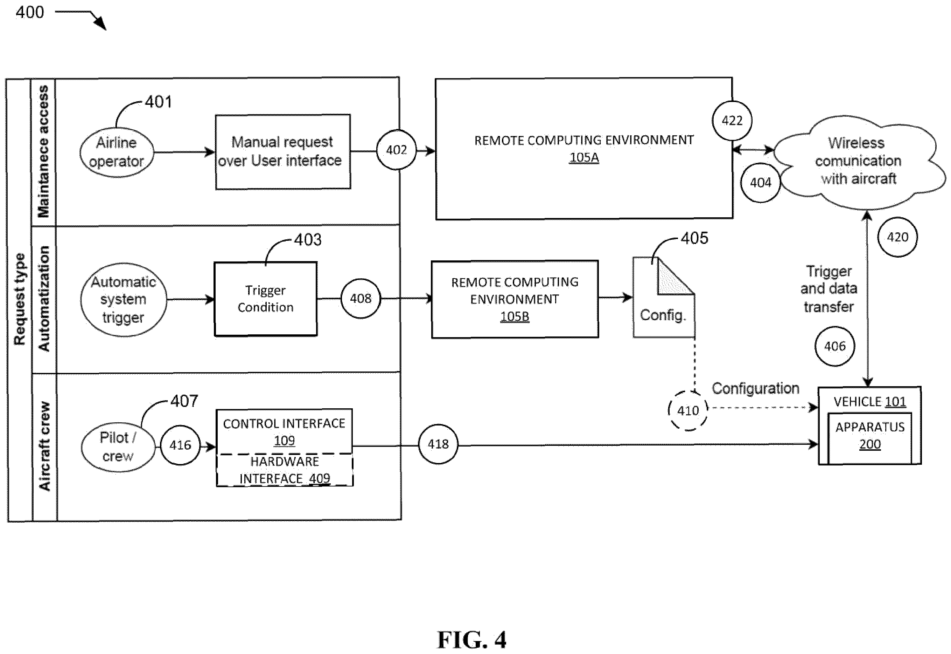

Having described example systems and apparatuses in accordance with embodiments of the present disclosure, example architectures of data and workflows in accordance with the present disclosure will now be discussed. In some embodiments, the systems and/or apparatuses described herein maintain data environment(s) that enable the workflows in accordance with the data architectures described herein. For example, in some embodiments, the systems and/or apparatuses described herein function in accordance with the data architectures depicted and described herein with respect to FIG. 3 and the workflows depicted and described herein with respect to FIGS. 4-6 are performed or maintained via the apparatus 200.

FIG. 3. illustrates an example data architecture 300 in accordance with at least some example embodiments of the present disclosure. In some embodiments, the vehicle data 112 includes performance data 301, one or more vehicle statuses 303, one or more operator recordings 305, and/or the like. In some embodiments, the performance data 301 includes vehicle altitude, airspeed, vertical speed, heading, pitch, roll, yaw, and/or the like. In some embodiments, the performance data 301 includes a current location of the vehicle, engine performance (e.g., thrust settings, fuel flow, temperatures, pressures, and/or the like), vehicle control inputs, and/or the like. In some embodiments, the apparatus 200 records one or more statuses of the vehicle 101. In some embodiments, the vehicle statuses 303 include statuses of hydraulic systems, electrical systems, plumbing systems, vehicle control systems, and/or the like, that are onboard the vehicle 101. In some embodiments, the vehicle statuses 303 include vehicle power failure, engine failure, turbulence, adverse weather, collision, near-collision, and/or the like. In some embodiments, the operator recordings 305 include recordings of activities occurring in an environment internal or external to the vehicle 101. In some embodiments, the operator recordings 305 include images, video, audio, and/or the like, of an operating entity in control of the vehicle 101 or of other individuals within the vehicle 101. For example, in an aerial vehicle context, the operator recordings 305 may include recordings of audio within a cockpit of the aerial vehicle. As another example, the operator recordings 305 may include video of a cockpit or of a field of view extending from the cockpit to an immediate external environment surrounding the vehicle 101.

In some embodiments, the trigger conditions 114 include predefined locations 307, transmission costs 309, performance thresholds 312, status thresholds 315, and/or the like. In some embodiments, the location 307 indicates a location at which a remote transfer of vehicle data 112 to a remote computing environment 105 may be initiated. For example, in an aerial vehicle context, the location 307 may indicate a region of airspace such that, when a current location of the aerial vehicle is within the region of airspace, the vehicle recording system 111 automatically initiates a remote transfer of vehicle data 112 to a remote computing environment 105. In some embodiments, the transmission cost 309 indicates a threshold value for a cost of transmitting data from the vehicle recording system 111 to a remote computing environment 105. For example, the transmission cost 309 may indicate a threshold monetary value, rate, and/or the like at or below which the vehicle recording system 111 is permitted to initiate a remote transfer of vehicle data 112.

In some embodiments the performance thresholds 312 include one or more predefined values, ranges, and/or the like of performance data 301 such that the vehicle recording system 111 may automatically initiate a remote transfer of vehicle data 112 in response to performance data 301 meeting the predefined value, range, and/or the like. For example, the performance threshold 312 may include a predefined vehicle speed, altitude, engine performance, and/or the like, that, upon being detected by the vehicle recording system 111, causes the vehicle recording system 111 to initiate a remote transfer of vehicle data 112 to a remote computing environment 105. In some embodiments, the status thresholds 315 include one or more predefined vehicle statuses such that the vehicle recording system 111 may automatically initiate a remote transfer of vehicle data 112 in response to a vehicle status 303 matching the predefined vehicle status. For example, the status threshold 315 may include a power status such that, upon the vehicle recording system 111 recording a loss of vehicle power, the vehicle recording system 111 automatically initiates a transfer of vehicle data 112 to a remote computing environment. As another example, the status threshold 315 may include one or more predefined system error codes to enable the vehicle recording system 111 to automatically initiate a transfer of vehicle data 112 in response to recording one or more matching error codes respective to a system of the vehicle 101.

In some embodiments, the request data 116 includes data for controlling conditions upon which the vehicle recording system 111 initiates remote transfers of vehicle data 112 and/or controlling the composition of vehicle data 112 included in a remote transfer. In some embodiments, the request data includes configuration data 317 that defines a composition of vehicle data 112 that is requested to be transferred from the vehicle recording system 111 to a remote computing environment 105. For example, the configuration data 117 may indicate that vehicle data requested for transfer includes current and historical locations of the vehicle 101, current and historical system statuses of the vehicle 101, and audio recordings of an environment internal to the vehicle 101. In some embodiments, the configuration data 117 indicates a time interval to cause the vehicle recording system 111 to transfer all vehicle data 112, or a subset thereof, that was recorded during the time interval. In some embodiments, the configuration the trigger condition values 319 define a trigger condition 114. For example, the remote computing environment 105 may provide a request to the vehicle recording system 111 including a trigger condition value 319 by which the vehicle recording system 111 configures one or more predefined locations 307, transmission costs 309, performance thresholds 312, status thresholds 315, and/or the like.

FIG. 4 illustrates a diagram of an example workflow 400 for initiating remote transfers of vehicle data in an aerial environment context. In some embodiments, the workflow 400 is performed by the vehicle recording system 111 and processing element 110 embodied as the apparatus 200 shown in FIG. 2 and described herein. In various embodiments, the apparatus 200 performs the workflow 400 to initiate a remote transfer of vehicle data 112 from a vehicle recording system 111 of a vehicle 101 to a remote computing environment 105A-B.

In some embodiments, the workflow 400 includes an airline operator 401 provisioning a manual request to a remote computing environment 105A-B by providing a user input to a user interface (indicium 402). In some embodiments, the workflow 400 includes the remote computing environment establishing wireless communication with an apparatus 200 of a vehicle 101 (e.g., an aircraft or other aerial vehicle) while the vehicle 101 is in motion (indicium 404). Alternatively, or additionally, in some embodiments, the workflow 400 includes the remote computing environment establishing wireless communication with an apparatus 200 of a vehicle 101 while the vehicle 101 is immobile. For example, in an aerial vehicle context, the workflow 400 may include the remote computing environment establishing wireless communication with an apparatus 200 disposed within a grounded aircraft to initiate a remote transfer of vehicle data from the apparatus 200 to the computing environment. In doing so, the workflow 400 may improve operational efficiency of the aircraft by providing alternative processes to obtain vehicle data without requiring maintenance personnel or other persons to physically access and remove portions of the aircraft.

In some embodiments, the workflow 400 includes the apparatus 200 receiving a request from the remote computing environment 105A to initiate a remote transfer of vehicle data from a vehicle recording system to the remote computing environment 105A (indicium 406). In some embodiments, the workflow 400 includes the apparatus initiating a remote transfer of vehicle data to the remote computing environment 105 in response to the request (indicium 420). In some embodiments, the workflow 400 further includes the remote computing environment 105A provisioning a user interface to the airline operator 401, where the user interface enables the airline operator 401 to view, access, and/or download the transferred vehicle data.

Additionally, or alternatively, in some embodiments, the workflow 400 includes a remote computing environment 105B determining that a trigger condition 403 for initiating a remote transfer of vehicle data is satisfied (indicium 408). Alternatively, in some embodiments, the remote computing environment 105 generates a trigger condition 403, which may be subsequently provisioned to the apparatus 200. In some embodiments, the workflow 400 optionally includes the remote computing environment 105B generating and provisioning configuration data 405 to the apparatus 200 to cause the apparatus 200 to configure a trigger condition for initiating a remote transfer of vehicle data to the remote computing environment 105A-B (indicium 410). The apparatus 200 may determine that vehicle data satisfies the trigger condition and, in response, initiate a transfer of the vehicle data to the remote computing environment 105A-B (indicium 420). Alternatively, in some embodiments, the workflow 400 includes the remote computing environment 105B automatically initiating a remote transfer of vehicle data from the apparatus 200 to the remote computing environment 105A-B in response to determining that the trigger condition 403 is satisfied (indicia 408, 420).

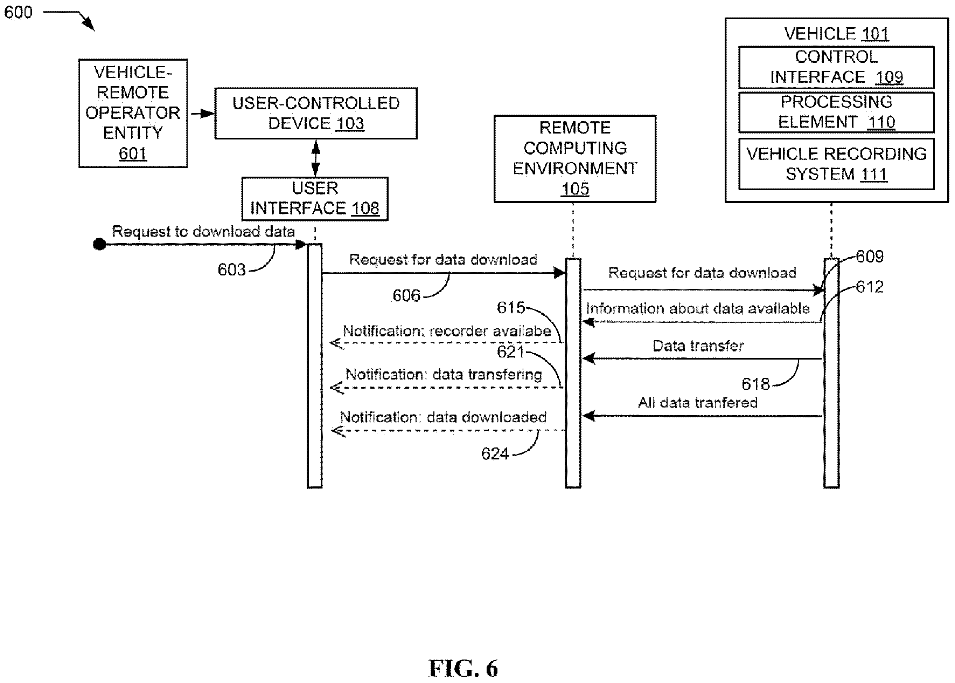

Additionally, or alternatively, in some embodiments, the workflow 400 includes a pilot or crewmember 407 onboard the vehicle 101 providing a user input to a control interface 109 of the vehicle 101 (indicium 416). The user input may embody a request to initiate a remote transfer of vehicle data from the apparatus 200 to the remote computing environment 105. In some embodiments, the apparatus 200 receives the user input from the control interface 109 (indicium 418). In some embodiments, the vehicle 101 includes a hardware interface 409 that enables wired or wireless transmission of user inputs from the control interface 109 to a vehicle recording system (e.g., embodied as the apparatus 200 in FIG. 6). In some embodiments, in response to the user input the apparatus 200 initiates a remote transfer of vehicle data to the remote computing environment 105A-B. Alternatively, prior to initiating the remote transfer, the apparatus 200 may communicate with the remote computing environment 105A-B to obtain approval to initiate the requested transfer of vehicle data.

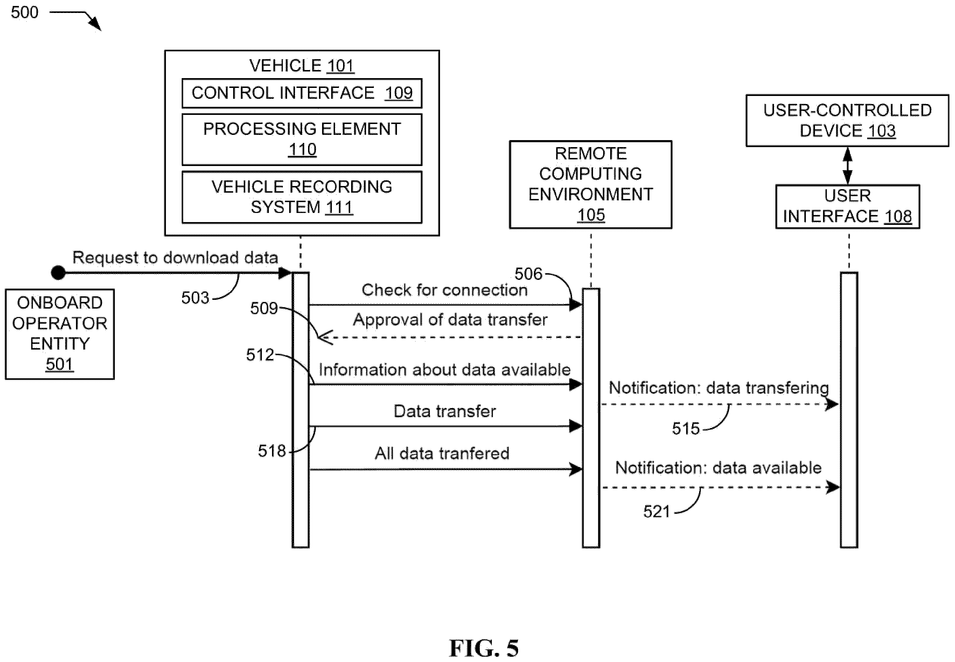

FIG. 5 illustrates a functional band diagram depicting operations of an example workflow 500 for initiating remote transfers of vehicle data. In some embodiments, the workflow 500 is performed to initiate a remote transfer of vehicle data from a vehicle recording system 111 of a vehicle 101 to a remote computing environment 105 in response to a control interface 109 of the vehicle 101 receiving a user input. For example, in an aerial vehicle context, the workflow 500 may be performed to enable a pilot, crew, and/or the like of an aircraft to request initiation of a remote transfer of vehicle data from the vehicle recording system 111 to a remote computing environment 105.

In some embodiments, the workflow 500 includes an onboard operator entity 501 providing a user input to a control interface 109 (indicium 503). In some embodiments, the user input comprises a request to download vehicle data from the vehicle recording system 111 to the remote computing environment 105. In some embodiments, the onboard operator entity 501 refers to any human, automated computing entity, and/or the like that is internal to a vehicle 101. For example, in an aerial vehicle context, the onboard operator entity 501 may embody a pilot, crewmember, technician, and/or the like onboard the aerial vehicle. In some embodiments, the control interface 109 embodies an instrument panel of the vehicle 101.

In some embodiments, the workflow 500 includes the vehicle recording system 111 determining whether a data connection is available between the vehicle recording system 111 and the remote computing environment 105 (indicium 506). In some embodiments, the vehicle recording system 111 determines whether a network 150 is available for remotely transferring vehicle data to the remote computing environment 105. In some embodiments, the vehicle recording system 111 determines whether a current transmission cost of transferring data via the network 150 exceeds a predefined threshold, where a threshold-exceeding transmission cost may cause the vehicle recording system 111 to determine a data connection is unavailable. In some embodiments, the workflow 500 optionally includes the vehicle recording system 111 requesting approval from the remote computing environment 105 to initiate a remote transfer of vehicle data to the remote computing environment 105. In some embodiments, the workflow 500 optionally includes the vehicle recording system 111 receiving approval from the remote computing environment 105 to initiate the remote transfer of vehicle data (indicium 509).

In some embodiments, the workflow 500 includes the vehicle recording system 111 providing to the remote computing environment 105 an indication of vehicle data that is available for remote transfer (indicium 512). For example, the vehicle recording system 111 provisions information to the remote computing environment 105 including types of vehicle data that may be remotely transferred to the remote computing environment 105, time intervals for which corresponding vehicle data may be provided, and/or the like. In some embodiments, the workflow 500 includes the vehicle recording system 111 causing the remote computing environment 105 to provision a notification to a user-controlled device 103, where the notification indicates the vehicle data that is available for transfer and/or that the vehicle recording system 111 is currently transferring vehicle data to the remote computing environment 105 (indicium 515). For example, the remote computing environment 105 may generate and provision a user interface 108 to the user-control device 103, where the user interface 108 comprises the notification of in-progress data transfer and/or an indication of vehicle data that is being transferred or is available for transfer.

In some embodiments, the workflow 500 includes the vehicle recording system 111 initiating a remote transfer of vehicle data to the remote computing environment 105 (indicium 518). For example, the vehicle recording system 111 may provision the vehicle data to the remote computing environment 105 using one or more networks, such as a satellite uplink and downlink. In some embodiments, the workflow 500 includes the vehicle recording system 111 causing the remote computing environment 105 to provision a notification to the user-controlled device 103, where the notification indicates that vehicle data has been transferred from the vehicle recording system 111 to the remote computing environment 105 and may be viewed, accessed, or downloaded by the user-controlled device 103.

FIG. 6 illustrates a functional band diagram depicting operations of an example workflow 600 for initiating remote transfers of vehicle data. Specifically, FIG. 6 depicts a functional band diagram of an example workflow 600 for initiating a remote transfer of vehicle data 112 from a vehicle recording system 111 of a vehicle 101 in response to a request from a user-controlled device 103 in an environment external to the vehicle 101. For example, the workflow 600 may be performed to enable a remote computing environment 105 to remotely download vehicle data 112 from the vehicle recording system 111 while the vehicle 101 is in motion (or immobile) and without requiring a user to physically access the vehicle recording system 111.

In some embodiments, the workflow 600 is embodied by computer program code stored on a non-transitory computer-readable storage medium of a computer program product configured for execution to perform the process as depicted and described. Additionally, or alternatively, in some embodiments, the workflow 600 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 embodies the vehicle recording system 111 and processing element 110 of a vehicle 101.

In some embodiments, the workflow 600 includes a vehicle-remote operator entity 601 providing a user input to a user interface 108 rendered on a user-controlled device 103 (indicium 603). In some embodiments, the user input comprises a request to download vehicle data from the vehicle recording system 111 to the remote computing environment 105. In some embodiments, the vehicle-remote operator entity 601 refers to any human, automated computing entity, and/or the like that is external to a vehicle 101. For example, in an aerial vehicle context, the vehicle-remote operator entity 601 may embody a ground-based airline operator. As another example, the vehicle-remote operator entity 601 may embody an administrator of a vehicle safety monitoring service. In still another example, the vehicle-remote operator entity 601 may embody vehicle maintenance personnel.

In some embodiments, the workflow 600 includes the user-controlled device 103 providing the user input to a remote computing environment 105 (indicium 606). Alternatively, or additionally, in some embodiments, the remote computing environment 105 collects the user input via the user interface 108. In some embodiments, the workflow 600 includes the processing element 110 and/or vehicle recording system 111 receiving from the remote computing environment 105 the request to download data from the vehicle recording system 111 (indicium 609). In some embodiments, the workflow 600 includes the vehicle recording system 111 providing to the remote computing environment 105 an indication of vehicle data that is available for remote transfer (indicium 612). For example, the vehicle recording system 111 provisions information to the remote computing environment 105 including types of vehicle data that may be remotely transferred to the remote computing environment 105, time intervals for which corresponding vehicle data may be provided, and/or the like.

In some embodiments, the workflow 600 includes the vehicle recording system 111 causing the remote computing environment 105 to provision a notification to the user-controlled device 103, where the notification indicates that the vehicle recording system 111 is available to remotely transfer vehicle data to the remote computing environment 105 (indicium 615). In some embodiments, the remote computing environment 105 provisions a user interface 108 to the user-controlled device 103 including the notification of vehicle recording system availability. In some embodiments, the workflow 600 includes the vehicle recording system 111 initiating a remote transfer of vehicle data to the remote computing environment 105 (indicium 618). For example, the vehicle recording system 111 may provision the vehicle data to the remote computing environment 105 using one or more networks, such as a satellite uplink and downlink. In some embodiments, the workflow 600 includes the vehicle recording system 111 causing the remote computing environment 105 to provision a notification to the user-controlled device 103, where the notification indicates that the remote transfer has been initiated and is in progress (indicium 621). In some embodiments, the workflow 600 includes the vehicle recording system 111 causing the remote computing environment 105 to provision a notification to the user-controlled device 103, where the notification indicates that the remote transfer of vehicle data has completed (indicium 624). In some embodiments, the remote computing environment 105 provisions a user interface 108 to the user-controlled device 103 to provide the vehicle-remote operator entity 601 access to the vehicle data.

### Example Processes of the Disclosure

Having described example systems and apparatuses, data architectures, data flows, and graphical representations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

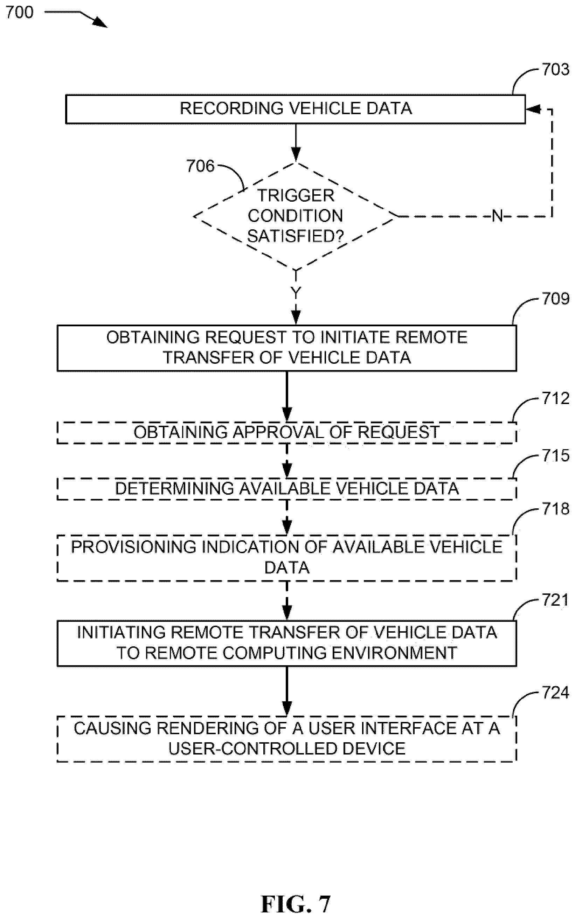

FIG. 7 illustrates a flowchart depicting operations of an example process 700 for initiating a remote transfer of vehicle data in accordance with at least some example embodiments of the present disclosure. In some embodiments, the process 700 is embodied by computer program code stored on a non-transitory computer-readable storage medium of a computer program product configured for execution to perform the process as depicted and described. Additionally, or alternatively, in some embodiments, the process 700 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with a user-controlled device 103, remote computing environment 105, and/or the like to perform one or more operations of the process 700.

In some embodiments, the apparatus 200 performs the process 700 while the vehicle 101 is in motion. In some embodiments, the apparatus 200 performs the process 700 while the vehicle 101 is immobile. Additionally, in some embodiments, the apparatus 200, embodying a vehicle recording system 111, performs the process 700 to initiate a remote transfer of vehicle data 112 to a remote computing environment 105 without requiring a user to physically access the vehicle recording system 111, which may improve efficiency and safety of obtaining vehicle data 112 from the vehicle recording system 111. For example, the process 700 may overcome technical challenges associated with obtaining vehicle data 112, such as typical requirements that the vehicle 101 be immobile and that a user remove a portion of the vehicle 101 to expose the vehicle recording system 111 and establish a physical link to the vehicle recording system 111.

At operation 703, the apparatus 200 includes means such as the recording circuitry 209, the communications circuitry 205, the input/output circuitry 207, the processor 201, and/or the like, or a combination thereof, that record vehicle data. For example, the apparatus 200 may record vehicle data 112 associated with a vehicle 101 within which the apparatus is disposed. In some embodiments, the apparatus 200 records performance data associated with the vehicle 101. For example, the apparatus 200 may record vehicle altitude, airspeed, vertical speed, heading, pitch, roll, yaw, and/or the like. As another example, the apparatus 200 may record a current location of the vehicle, engine performance (e.g., thrust settings, fuel flow, temperatures, pressures, and/or the like), vehicle control inputs, and/or the like. In some embodiments, the apparatus 200 records one or more statuses of the vehicle 101. For example, the apparatus 200 may record respective statuses of hydraulic systems, electrical systems, plumbing systems, vehicle movement control systems, and/or the like, that are onboard the vehicle 101. In some embodiments, the apparatus 200 generates operator recordings in an environment internal or external to the vehicle 101. For example, in an aerial vehicle context, the apparatus 200 may record audio within a cockpit of the aerial vehicle. In some embodiments, the apparatus 200 records images, videos, and/or the like of an environment internal to the vehicle 101. Alternatively, or additionally, in some embodiments, the apparatus 200 records images, videos, and/or the like of an environment immediately external to the vehicle 101. For example, in an aerial vehicle context, the apparatus 200 may record video corresponding to a field of view around the vehicle 101 that is observable through a cockpit of the vehicle 101. In some embodiments, the apparatus 200 records timestamps in association with the vehicle data 112 to enable time series storage of vehicle performance data, vehicle statuses, operator recordings, and/or the like.

At operation 706, the apparatus 200 optionally includes means such as the recording circuitry 209, the communications circuitry 205, the input/output circuitry 207, the processor 201, and/or the like, or a combination thereof, that determine whether the vehicle data 112 satisfies one or more trigger conditions for initiating a remote transfer of vehicle data to a remote computing environment. For example, the apparatus 200 may determine whether the vehicle data 112 satisfies one or more trigger conditions. In some embodiments, in response to the apparatus 200 determining a trigger condition is satisfied, the process 700 proceeds to operation 709. In some embodiments, in response to the apparatus 200 determining no trigger conditions are satisfied, the process 700 proceeds to operation 703 to record additional vehicle data 112.

In some embodiments, the apparatus 200 determines whether a current location of the vehicle 101 matches or is within a predefined location associated with initiating remote transfers of vehicle data 112. For example, in an aerial vehicle context, the apparatus 200 may determine whether an aerial vehicle is currently located with a predefined region of airspace. Additionally, or alternatively, in some embodiments, the apparatus 200 determines a current cost of transmitting vehicle data 112 to a remote computing environment 105 via one or more networks 150. In some embodiments, the apparatus 200 determines whether the current cost of data transmission satisfies a predefined threshold value. For example, the apparatus 200 may determine whether a current cost of transmitting data to the remote computing environment 105 is less than a predefined maximum transmission cost.

In some embodiments, the apparatus 200 determines whether real-time vehicle performance data and/or real-time vehicle status data satisfies one or more trigger conditions. For example, the apparatus 200 may determine whether a current airspeed, vertical speed, groundspeed, and/or the like, of the vehicle 101 satisfies a predefined threshold. As another example, the apparatus 200 may determine whether the vehicle 101 is experiencing a power failure, engine failure, control failure, turbulence, fire, depressurization, and/or the like. In some embodiments, the apparatus 200 receives a request to initiate a remote transfer of vehicle data 112, where the request includes one or more predefined trigger conditions by which the apparatus 200 may determine when to initiate the remote transfer. For example, the apparatus 200 may receive a request including a predefined location, time interval, altitude, and/or the like, at which to initiate a remote transfer of vehicle data 112 to the remote computing environment 105.

At operation 709, the apparatus 200 includes means such as the recording circuitry 209, the communications circuitry 205, the input/output circuitry 207, the processor 201, and/or the like, or a combination thereof, that obtain a request to initiate a remote transfer of vehicle data 112 to a remote computing environment 105. For example, the apparatus 200 may obtain a request to initiate the remote transfer by automatically generating the request based at least in part on a trigger condition, receiving the request in response to a user input from a user-controlled device 103 onboard the vehicle 101, or receiving the request from the remote computing environment 105. In some embodiments, the apparatus 200 automatically generates the request in response to determining that one or more trigger conditions are satisfied.

Alternatively, or additionally, in some embodiments, the apparatus 200 receives the request in response to user input provided to a user-controlled device 103 in an environment external to the vehicle 101. For example, in an aerial vehicle context, an operating entity of an airline may request vehicle data from an airborne aerial vehicle by providing a user input to a user-controlled device 103. In some embodiments, a remote computing environment 105 receives the input to the user-controlled device and, in response, provides a request to the apparatus 200 to initiate a remote transfer of vehicle data 112.

Alternatively, or additionally, in some embodiments, the apparatus 200 receives the request in response to user input provided to a user-controlled device in an environment internal to the vehicle 101. In some embodiments, the vehicle 101 includes a user-controlled device 103 embodied as a control interface. For example, in some contexts, the vehicle 101 embody an aerial vehicle that includes a control interface embodied as an instrument panel. In an aerial environment context, a pilot, crewmember, and/or the like may provide a user input to the instrument panel, which may cause a processing element 110 to generate and provision a request to the vehicle recording system 111.

At operation 712, the apparatus 200 optionally includes means such as the recording circuitry 209, the communications circuitry 205, the input/output circuitry 207, the processor 201, and/or the like, or a combination thereof, that obtain approval of the request from the remote computing environment 105. For example, the apparatus 200 may obtain approval of the request from the remote computing environment 105 to determine whether to initiate a remote transfer of the vehicle data 112 to the remote computing environment 105. In some embodiments, the apparatus 200 receives a request to initiate a remote transfer of vehicle data 112, where the request is based at least in part on user input provided to a user-controlled device 103 onboard the vehicle 101. For example, the apparatus 200 may receive a request based at least in part on a pilot, crewmember, and/or the like providing a user input to a control interface of the vehicle 101, such as an instrument panel. In some embodiments, the apparatus 200 provides the request to the remote computing environment 105 to enable the remote computing environment 105 to approve or deny the request. In some contexts, the apparatus 200 provides additional data related to the vehicle 101 including a current location of the vehicle 101, current transmission cost, and/or the like. In some contexts, the remote computing environment 105 may deny the request in response to the vehicle 101 moving through a location in which data transmission is not permitted. In some contexts, the remote computing environment 105 may deny the request in response to a transmission cost at the current location of the vehicle 101 exceeding a predetermined threshold. Alternatively, or additionally, in some embodiments, the apparatus 200 may determine whether to approve or deny the request based at least in part on a current location of the vehicle 101, current data transmission cost, and/or the like.

In some embodiments, the apparatus 200 receives an approval or a denial of the request from the remote computing environment 105. In some embodiments, in response to the apparatus 200 receiving an approval of the request, the process 700 proceeds to operations 712, 715, and/or 721. In some embodiments, in response to the apparatus 200 receiving a denial of the request, the apparatus 200 causes rendering of a notification at the user-controlled device 103 aboard the vehicle 101. In some contexts, the notification may indicate that the request to initiate a remote transfer of vehicle data 112 was denied. In some contexts, the notification indicates a reason for the denial, such as a current location of the vehicle 101 or a current data transmission cost.

At operation 715, the apparatus 200 optionally includes means such as the recording circuitry 209, the communications circuitry 205, the input/output circuitry 207, the processor 201, and/or the like, or a combination thereof, that determining a subset of the vehicle data 112 that is available to remotely transfer to the remote computing environment 105. For example, the apparatus 200 may determine a subset of the vehicle data 112 that is available for the requested remote transfer. In some embodiments, the apparatus 200 determines a subset of the vehicle data 112 that is available to transfer based at least in part on a transmission cost associated with a current location of the vehicle 101. Alternatively, or additionally, in some embodiments, the apparatus 200 determines the subset of the vehicle data 112 based at least in part on a bandwidth of the network 150 by which the remote transfer will occur. For example, the apparatus 200 may determine that a bandwidth of the network 150 is sufficient to transfer vehicle performance data and vehicle statuses, but is insufficient to transmit operator recordings (e.g., cockpit voice recordings, images, video, and/or the like).

At operation 718, the apparatus 200 optionally includes means such as the recording circuitry 209, the communications circuitry 205, the input/output circuitry 207, the processor 201, and/or the like, or a combination thereof, that provision an indication of the vehicle data 112 that is available for remote transfer to the remote computing environment 105. For example, the apparatus 200 may provision a notification to the remote computing environment 105 that indicates a subset of vehicle data 112 that is available to be remotely transferred to the remote computing environment 105. In some contexts, the notification causes the remote computing environment 105 to provision a user interface to a user-controlled device 103, where the user interface indicates the subset of vehicle data 112 available for transfer.

At operation 721, the apparatus 200 optionally includes means such as the recording circuitry 209, the communications circuitry 205, the input/output circuitry 207, the processor 201, and/or the like, or a combination thereof, that initiate a remote transfer of the vehicle data 112 to the remote computing environment 105. For example, the apparatus 200 may initiate a remote transfer of vehicle data 112, or a subset of the vehicle data 112, to the remote computing environment 105. In some embodiments, the apparatus 200 initiates the remote transfer in response to receiving approval from the remote computing environment 105. Alternatively, or additionally, in some embodiments, the apparatus 200 initiates the remote transfer in response to determining that one or more trigger conditions are satisfied.

At operation 724, the apparatus 200 optionally includes means such as the recording circuitry 209, the communications circuitry 205, the input/output circuitry 207, the processor 201, and/or the like, or a combination thereof, that cause rendering of a user interface at a user-controlled device 103. For example, the apparatus 200 may cause rendering of a user interface on a display of a user-controlled device 103 by remotely transferring vehicle data 112 to the remote computing environment 105, which is accessible to the user-controlled device 103. In some embodiments, because the remote transfer occurs directly from a vehicle recording system to the remote computing environment 105, the vehicle data 112 provided to the remote computing environment 105 and user-controlled device 103 may be trusted as originating from the vehicle recording system 111, which may be advantageous for quality control, investigation, and certification processes associated with the vehicle 101.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method, comprising:
obtaining a request to remotely download vehicle data from a vehicle recording system to a remote computing environment without physically accessing the vehicle recording system and while a vehicle containing the vehicle recording system is in motion;
initiating, based at least in part on the request, a remote transfer of the vehicle data from the vehicle recording system to the remote computing environment, wherein:
the remote transfer occurs without requiring a user to physically access the vehicle recording system; and
the remote computing environment is accessible to a user-controlled device to provide the vehicle data.

2. The method of claim 1, wherein:
the vehicle embodies an aerial vehicle; and
the vehicle recording system embodies a flight recorder of an aerial vehicle.

3. The method of claim 1, wherein:
the request is obtained from the remote computing environment; and
the remote computing environment generates the request in response to user input provided to a user interface by the user-controlled device in an environment external to the vehicle.

4. The method of claim 1, wherein:
the user-controlled device embodies a control interface onboard the vehicle and configured to communicate with the vehicle recording system; and
the request is obtained via a user input provided to a control interface of the vehicle.

5. The method of claim 4, wherein:
the vehicle embodies an aerial vehicle; and
the control interface embodies an instrument panel of the aerial vehicle.

6. The method of claim 4, further comprising:
initiating the remote transfer of the vehicle data in response to receiving an approval of the request from the remote computing environment.

7. The method of claim 1, wherein:
the request comprises configuration data; and
the method further comprises:
determining a subset of the vehicle data to remotely transfer based at least in part on the configuration data, wherein the remote transfer is limited to the determined subset of the vehicle data.

8. An apparatus comprising at least one processor and at least one non-transitory memory having computer-coded instructions stored thereon that, in execution with at least one processor, cause the apparatus to:
obtain a request to remotely download vehicle data from a vehicle recording system to a remote computing environment without physically accessing the vehicle recording system and while a vehicle containing the vehicle recording system is in motion;
initiate, based at least in part on the request, a remote transfer of the vehicle data from the vehicle recording system to the remote computing environment, wherein:
the remote transfer occurs without requiring a user to physically access the vehicle recording system; and
the remote computing environment is accessible to a user-controlled device to provide the vehicle data.

9. The apparatus of claim 8, wherein:
the remote transfer of the vehicle data causes the remote computing environment to render the vehicle data on a display of the user-controlled device.

10. The apparatus of claim 8, wherein the computer-coded instructions, in execution with the at least one processor, further cause the apparatus to:
generate the request in response to determining a current location of the vehicle satisfies a predefined trigger condition comprising a predefined location.

11. The apparatus of claim 8, wherein the computer-coded instructions, in execution with the at least one processor, further cause the apparatus to:
obtain real-time vehicle data from the vehicle recording system; and
generate the request in response to determining the real-time vehicle data satisfies at least one predefined trigger condition.

12. The apparatus of claim 11, wherein
the at least one predefined trigger condition comprises a predefined vehicle speed.

13. The apparatus of claim 11, wherein
the at least one predefined trigger condition comprises a predefined vehicle status.

14. The apparatus of claim 13, wherein
the predefined vehicle status comprises at least one of a power failure, engine failure, or turbulence.

15. A computer program product comprising at least one non-transitory computer-readable storage medium having computer program code stored thereon that, in execution with at least one processor, is configured to:
obtain a request to remotely download vehicle data from a vehicle recording system to a remote computing environment without physically accessing the vehicle recording system and while a vehicle containing the vehicle recording system is in motion;
initiate, based at least in part on the request, a remote transfer of the vehicle data from the vehicle recording system to the remote computing environment, wherein:
the remote transfer occurs without requiring a user to physically access the vehicle recording system; and
the remote computing environment is accessible to a user-controlled device to provide the vehicle data.
